# FASCICULE DE BREVET EUROPEEN

(11) **EP 0 636 578 B1**
(45) Date de publication et mention de la délivrance du brevet: **12.03.1997**
(21) Numéro de dépôt: 94420199.5
(22) Date de dépôt: 12.07.1994
(51) Int. Cl.: C01F 7/06

(54) **Procédé pour fluidifier des suspensions aqueuses de boues rouges dans la fabrication de l'alumine par le procédé BAYER**
Verfahren zur Fluidisierung von wässrigen Rotschlammsuspensionen bei der Herstellung von Aluminiumoxid gemäss dem Bayerverfahren
Process for the fluidization of aqueous red mud suspensions during the preparation of alumina by the Bayer process

(30) Priorité: 29.07.1993 FR 9309584
(43) Date de publication de la demande: 01.02.1995
(73) Titulaire: S. N. F., F-42000 Saint-Etienne (FR)
(72) Inventeur: Parker, Adrian, Cleck Heaton BD194HZ (GB); Pich, René, F-42100 Saint Etienne (FR)
(74) Mandataire: Laurent, Michel

(56) Documents cités:
- DE-A- 1 767 422
- FR-A- 2 430 792
- GB-A- 2 080 272
- US-A- 4 083 925
- DATABASE WPI Section Ch, Week 8225, Derwent Publications Ltd., London, GB; Class J01, AN 82-51474E & JP-A-57 078 911 (KURITA WATER IND) 17 Mai 1982
- LIGHT METALS 1986, 1988, WARRENDALE (US) pages 61 - 68 L.J. CONNELLY ET AL. 'Synthetic flocculant technology in the Bayer process.'
- BAUXITE (PROC. BAUXITE SYMP. 1984), 1984, ED.: JACOBS ET AL. pages 788 - 810 M.J. PEARSE ET AL. 'Application of special chemicals (flocculants and dewatering aids) for red mud separation and hydrate filtration.'

## Description

L'invention concerne un procédé perfectionné pour fluidifier les suspensions aqueuses floculées de boues rouges dans la fabrication de l'alumine par le procédé BAYER.

Le procédé BAYER pour la fabrication de l'alumine à partir de la bauxite, est connu depuis longtemps. Il n'y a pas donc lieu de le décrire ici en détail. Pour l'essentiel, cette technique consiste à mettre tout d'abord en présence, sous pression et en température, de la bauxite et de la soude, puis à faire décanter la liqueur obtenue, en présence d'un agent floculant (F) généralement anionique, pour récupérer d'une part l'alumine et, d'autre part, une liqueur de boues rouges fortement basique. Comme on le sait, ces boues rouges doivent être éliminées. Parallèlement, il faut récupérer la soude. Pour ce faire, on fait décanter et on lave ces liqueurs dans des bacs successifs (deux à dix selon les installations), où l'on agite les liqueurs lavées par la liqueur précédente, recyclée à contre-courant. On amène ainsi progressivement la concentration en soude d'une teneur initiale de 200 à 300 g/litre à une teneur finale voisine de dix grammes par litre. Simultanément, la concentration en boues rouges est amenée progressivement au voisinage de 40 à 50 % en matière solide sèche. Toutefois, la présence dans ces liqueurs de l'agent floculant (F), augmente la concentration en boues rouges qui deviennent alors de plus en plus difficiles à être convoyées par pompage jusqu'au site d'élimination, souvent dénommé "lac" ou "lagon".

Dans le document CA-A-819 040, correspondant au document DE-A-1 767 422, pour faciliter la décantation de ces suspensions fortement visqueuses, on a proposé d'ajouter dans les bacs de décantation un mélange floculant comprenant de l'amidon et un copolymère d'acrylamide et d'acrylate de sodium de poids moléculaire supérieur à 50 000, de préférence de l'ordre de dix millions. Cette technique qui favorise la décantation augmente malheureusement la viscosité des suspensions qui deviennent alors plus difficiles à pomper.

Dans le document US-A-4 169 824, correspondant au document FR-A-2 430 792, on a proposé, après la dernière étape de lavage, d'ajouter à la liqueur de boues rouges floculées destinée à être éliminée, un agent dispersant (D) à base d'un polymère d'acide acrylique, notamment un méthacrylate de méthyle, de poids moléculaire compris entre 5000 et 30 000, et ce à raison de 50 grammes par tonne (50 g/t) de boues rouges sèches. On abaisse de la sorte la viscosité de la solution finale des boues qui deviennent plus fluides et ainsi aptes à être pompées dans les installations existantes, et par voie de conséquence convoyées jusqu'au point d'élimination finale. Bien que cette solution donne d'excellents résultats, elle reste globalement coûteuse à mettre en oeuvre, d'autant qu'il faut utiliser des quantités appréciables d'agent dispersant (D). En outre, cette solution ne résout pas le problème de la décantation elle-même, et du mauvais écoulement de ces boues visqueuses.

Par ailleurs, l'injection d'un agent dispersant (D) juste après le dernier lavage, mais avant la pompe, nécessite de mettre en oeuvre un matériel de dispersion additionnel spécifique, et de renforcer les tubulures et les pompes d'évacuation, ce qui augmente l'investissement. En outre, pour une concentration donnée de boues, celà diminue l'efficacité du pompage. Enfin, le mélange s'effectuant dans la tubulure de liaison juste avant la pompe, est réalisé dans un temps très bref, ce qui est loin d'être idéal pour assurer une bonne homogénéité du milieu à pomper.

Dans le document US-A-5 043 077, on a suggéré d'ajouter dans le dernier bac de dilution un mélange contenant de la léonardite. Cet agent diluant est ajouté en quantité appréciable (de 0,1 à 10 % par rapport à la quantité de boues sèches). Celà nécessite d'ajouter du matériel approprié et par voie de conséquence augmente l'investissement. Comme on ajoute une matière solide, celle-ci va affecter l'efficacité ultérieure du pompage. Enfin, la mise en oeuvre de cet agent diluant très spécifique provoque parfois des précipitations par agglomération autour de ce composé. C'est sans doute la raison pour laquelle cette technique ne s'est guère développée.

Pour accélérer cette décantation, dans le document GB-A-2 080 272, on a suggéré d'utiliser un mélange de deux agents floculants (F), introduits en série de préférence dans les derniers stades du traitement, à savoir une émulsion de polyacrylate de sodium et un polyacrylamide, tous deux de poids moléculaire compris entre cinq et dix millions.

Ce procédé présente encore les mêmes inconvénients que les procédés ci-dessus où l'on utilise qu'un seul agent floculant, notamment en ce qui concerne les difficultés de pompage.

L'invention pallie ces inconvénients. Elle vise un procédé pour fluidifier les suspensions aqueuses des boues rouges dans la fabrication de l'alumine par la technique BAYER, qui soit facile à mettre en oeuvre, permette efficacement de diminuer la viscosité finale de ces boues destinées à être pompées, puis convoyées jusqu'à élimination, et ce tout en étant compatible avec la rhéologie propre de ces boues, et ce sans modification des installations existantes, donc sans investissement supplémentaire significatif.

Ce procédé perfectionné pour fluidifier les suspensions aqueuses floculées de boues rouges dans la fabrication de la bauxite par le procédé de Bayer, qui consiste :
. à dissoudre de la bauxite par de la soude,
. puis, à décanter et à laver les boues rouges formées pour les séparer de l'alumine dans des bacs successifs tout en recyclant en amont les eaux de lavage,
. et enfin, à éliminer les boues rouges ainsi traitées,
et dans lequel, on introduit dans la suspension de l'un des bacs successifs, un agent floculant (F) constitué par un polyacrylamide de poids moléculaire supérieur à dix millions ;
se caractérise en ce que simultanément à cet agent floculant (F), on ajoute à la suspension et dans le même bac, un agent dispersant (D) formé par un polymère d'acide acrylique anionique de poids moléculaire inférieur à cinquante mille.

En d'autres termes, l'invention consiste à sélectionner un mélange spécifique d'agent floculant (F) et d'agent dispersant (D), et à introduire ce mélange non pas comme on le faisait jusqu'alors de manière séparée juste avant le pompage et après la décantation, mais au contraire ensemble et pendant le cycle même de la décantation. De manière surprenante, en opérant avec ce mélange spécifique introduit pendant la décantation, on diminue la viscosité de la suspension tout en augmentant sa concentration en boues ; par ailleurs, cette suspension reste parfaitement pompable et convoyable dans les installations existantes, et ce jusqu'à l'élimination définitive de ces boues.

Autrement dit, l'invention consiste à faire agir simultanément et tout au long du cycle de lavage-décantation, un mélange spécifique d'agent dispersant D et d'un agent floculant F. Il est bien connu que l'emploi d'un agent floculant (F) aboutit à une concentration, à un épaississement de la suspension traitée, alors qu'à l'opposé, l'utilisation d'un agent dispersant (D) provoque une dilution et une fluidification de la même suspension. Le sens commun ne conduit donc pas à mélanger ces deux produits connus pour des effets diamétralement opposés. En revanche, le choix d'un floculant (F) et d'un dispersant (D) particuliers, introduits ensemble dans un des bacs de décantation de la suspension, montre, contre toute attente, des résultats avantageux et totalement inattendus. L'effet concentrateur de l'agent floculant (F) et l'effet diluant de l'agent dispersant (D) ne s'anéantissent pas, mais bien au contraire, coopèrent à un résultat nouveau inattendu.

Ainsi, le procédé selon l'invention qui consiste à incorporer pendant la décantation à la fois un agent floculant F et un agent dispersant D, pour permettre une meilleure décantation des boues, un meilleur épaississement et un meilleur pompage nécessitait de vaincre un préjugé certain, puisqu'elle consiste à faire appel à un mélange particulier de composés ayant des effets antagonistes.

Comme on le sait, l'addition de l'agent floculant (F) favorise la formation du floc avec la bauxite. En revanche, l'agent dispersant (D) qui est introduit simultanément, vient s'insérer de manière homogène dans les flocs et autour, au fur et à mesure de leur formation, pour empêcher leur compactage ou leur agglomération, ce qui diminue la viscosité du milieu, grâce aux effets répulsifs des groupements COO⁻ de chaque composé de dispersant (D) emprisonnée dans le floc. Ainsi, l'addition de l'agent dispersant (D) évite ce compactage des flocs et permet de conserver une suspension de flocs individuels. Comme par ailleurs, le milieu est fortement anionique du fait de la présence de l'agent dispersant (D), les flocs subissent des effets répulsifs qui les maintiennent ainsi sous forme individualisée.

Avantageusement, ce procédé est adapté pour le traitement des boues rouges à des concentrations de boues sèches comprises entre 2 et 750 grammes/litre.

En pratique :
- le polyacrylamide (agent floculant F) est anionique et présente un poids moléculaire supérieur à dix millions, de préférence compris entre quinze et vingt-cinq millions ; on peut mettre en oeuvre des polyacrylamides sous forme de solutions, mais de préférence, on fait appel à des poudres à dissoudre au moment de l'utilisation ;
- le polyacrylamide est anionique à au moins 10 %, de préférence à 20-100 %, c'est-à-dire présente une anionicité comprise entre 20 et 100 moles pour cent ; le polyacrylamide peut être un homopolymère de l'acide acrylique, un copolymère de l'acrylamide, voire un terpolymère, de préférence linéaire ;
- le polymère d'acide acrylique (agent dispersant D) est de préfrence un polyacrylate de soude, de poids moléculaire compris entre cinq cents et cinquante mille, de préférence entre mille et dix mille ; on a observé que l'efficacité est réduite si le poids moléculaire est inférieur à cinq cents ou s'il excède cinquante mille ; on a également observé que l'on obtenait des meilleurs résultats lorsque ce poids moléculaire a une faible dispersion gaussienne, c'est-à-dire lorsque sa polydispersité est faible, en général inférieure à 3 ;
- dans une variante préférée, on fait appel à un acrylate de potassium, de calcium, ou d'ammonium, afin de ne pas surcharger le milieu en soude ; dans une autre variante, on ajoute de l'acide polyacrylique dans le milieu qui en réagissant avec la soude présente, forme alors in-situ l'agent dispersant D recherché ;
- le rapport dans le mélange caractéristique entre la quantité en poids d'agent floculant F (polyacrylamide) par rapport à la quantité en poids d'agent dispersant D (polyacrylate), est compris entre 0,1 et 5, de préférence est voisin de un ;
- le mélange d'agent floculant F et d'agent dispersant D, est réalisé préalablement dans un réservoir, puis est introduit à température ambiante en solution aqueuse à une concentration comprise entre 0.1 et 20 g/litre et de préférence 1 à 10 g/litre ; on a observé que si cette concentration est inférieure à un gramme/litre, les résultats ne sont pas significatifs ; de même si la concentration excède 20 g/l, on augmente inutilement le coût, sans amélioration proportionnelle ;
- en pratique, le mélange (F + D) est introduit à une température voisine de celle du bac considéré ;
- lorsque la décantation est suivie de plusieurs phases de lavage du décantat, l'adjonction du mélange caractéristique peut aussi s'effectuer dès les premiers bacs de l'installation ; on augmente ainsi l'efficacité du pompage de transfert d'un bac à l'autre, ce qui permet d'augmenter la concentration de la suspension en minerai, et en final de réduire le nombre de bacs, donc l'investissement ;
- la quantité du mélange caractéristique de l'invention est introduite par rapport à la quantité de boues sèches, à raison de cinq à deux mille grammes par tonne (5 à 2000 g/t), de préférence entre vingt et quatre cents grammes par tonne (20 et 400 g/t) ;
- l'adjonction du mélange caractéristique ( F + D) s'effectue dans les derniers bacs de l'installation.

Dans une forme d'exécution pratique, l'invention consiste à introduire dans au moins un des bacs successifs de lavage et de décantation des boues rouges, de préférence dans les derniers bacs, un mélange F + D comprenant en égales proportions :
. un polyacrylamide anionique de poids moléculaire supérieur à dix millions, de préférence de 15 à 25 millions ;
. un acrylate de poids moléculaire inférieur à cinquante mille, de préférence de mille à dix mille.

Dans une première forme de réalisation, le mélange caractéristique de floculant (F) et de dispersant (D) est effectué sur le site même de production de ces composés, puis le mélange, en quantités appropriées, est mis en sacs prêts à l'emploi.

Dans une variante préférée, l'agent floculant (F) mis en suspension aqueuse et l'émulsion d'agent dispersant (D), sont introduits côte à côte dans la tubulure d'alimentation en eaux de lavage juste en dessous de la zone de sédimentation des boues.

L'invention concerne également un dispositif pour introduire ce mélange dans un bac de lavage des boues. Dans une forme d'exécution simplifiée, ce dispositif comprend une tubulure d'alimentation qui pénètre dans la solution contenue dans le bac considéré, au voisinage mais juste en dessus de la zone de sédimentation des boues, de manière à assurer un mélange homogène avec la solution de lavage.

Dans une forme d'exécution préférée, la solution caractéristique est envoyée dans cette tubulure d'alimentation par une valve reliée au réservoir d'alimentation et pilotée par un moyen électronique en fonction du dosage et de la concentration des eaux de lavage surnageantes, et la solution est introduite annulairement autour d'un venturi au centre duquel est alimentée la solution de boues à traiter.

La manière dont l'invention peut être réalisée et les avantages qui en découlent, ressortiront mieux des exemples de réalisation qui suivent, à l'appui des figures annexées.

La figure 1 est une représentation schématique d'une installation BAYER conforme à l'état de la technique décrit dans le document US-A-4 169 824 visé dans le préambule.

La figure 2 est une représentation schématique de la même installation modifiée conformément à l'invention.

La figure 3 est une représentation du dispositif d'alimentation préféré de l'invention, montré en détail dans une autre forme d'exécution à la figure 4.

La figure 5 est une représentation sous forme de courbes illustrant les avantages du procédé de l'invention.

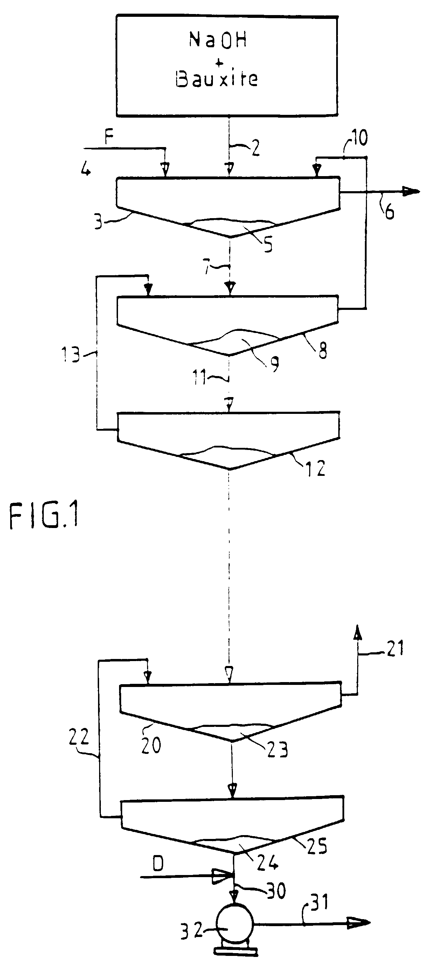

En se référant à la figure 1, l'installation pour la préparation d'alumine par le procédé BAYER classique, comprend essentiellement un réacteur (1) dans lequel on introduit sous pression et à haute température, un mélange de bauxite et de soude ayant par exemple une concentration en soude de 200 à 300 g/litre. Le produit (2) de la réaction est transféré à un décanteur (3) où l'on ajoute par la tubulure (4) l'agent floculant (F) anionique, par exemple à une concentration voisine de cent grammes par tonne (100 g/t) de boues sèches. On précipite alors les boues rouges (5) et on sépare l'alumine en (6).

La solution (7) est ensuite pompée dans un décanteur (8) pour parfaire la séparation des boues rouges (9). La liqueur surnageante riche en soude (concentration voisine de 180 g/litre), est recyclée en (10). La suspension de boues rouges (11) est ensuite transférée dans un autre bac en série (12) et la liqueur surnageante est recyclée à contre-courant en (13). Et ainsi de suite jusqu'aux deux derniers bacs (20,25) de l'installation. Les références (21,22) désignent le circuit de recyclage à contre-courant des eaux de lavage de plus en plus pauvres en soude, et les références (23,24) désignent les boues rouges traitées de la sorte.

La suspension (30) riche en boues rouges (concentration voisine de 600 g/l) issue du dernier bac (25) est alors, selon les enseignements du document US-A-4 169 824, additionnée d'un agent dispersant (D), puis est envoyée dans le circuit d'élimination (31) grâce à une pompe (32), et de là au "lac".

En pratique, l'installation comprend sept à dix bacs successifs de décantation (8,12,20,25).

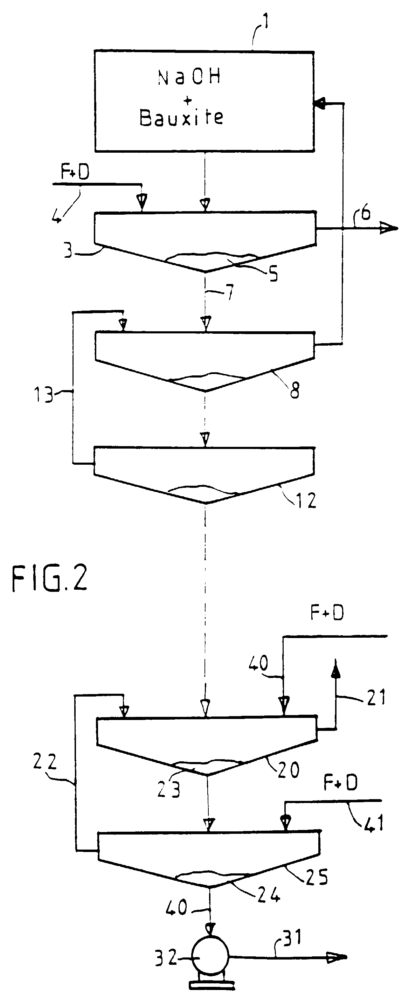

Comme déjà dit, la figure 2 illustre le perfectionnement selon l'invention. Ce procédé consiste, dans le dernier ou dans les deux derniers bacs successifs (20,25), à introduire dans les eaux de lavage un mélange (F + D) d'au moins un agent floculant (F) et d'au moins un agent dispersant (D) spécifiques. Ce mélange désigné sur la figure 2 par la référence (F + D) peut être introduit par tous moyens connus. Selon l'invention, il n'y a plus d'introduction de l'agent dispersant (D) après le dernier bac (25) comme montré à la figure 1.

Dans une variante, le mélange caractéristique (F + D) de polyacrylamide et d'acrylate, peut être introduit en tête, c'est-à-dire dans le premier bac (3).

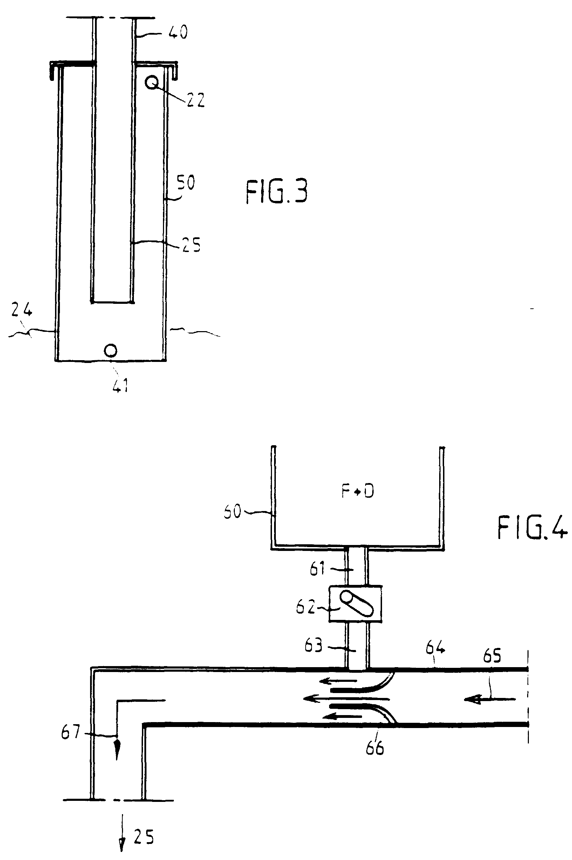

L'introduction du mélange caractéristique F + D se fait (voir figures 3 et 4) au moyen d'une tubulure d'alimentation (50), reliée à la tubulure d'amenée (40,41) du mélange, qui pénètre le plus profondément possible dans le bac concerné (25), de préférence au voisinage, mais en dessus de la zone de sédimentation des boues traitées (24). On obtient ainsi un mélange homogène.

Il importe que le mélange caractéristique F + D soit introduit à une température voisine de la température des bacs (20,25) considérés, par exemple à une température comprise entre 30 et 40°C. Si nécessaire, on peut préalablement chauffer le mélange F + D en conséquence.

Comme précédemment, les eaux de lavage du bac (25) contenant l'excès de la suspension du bac précédent (20) et du mélange additionnel introduit en (21) dans le bac suivant (25), sont recyclées à contre-courant par les conduits appropriés (21,22).

Dans la forme d'exécution montrée à la figure 4, le mélange F + D est disposé dans un réservoir (60), relié par une tubulure (61) à une valve (62), dont l'ouverture est programmée en fonction du dosage de la suspension à traiter. Cette valve (62) est reliée par une tubulure (63) à la conduite d'amenée (64) des boues rouges à traiter (65). Pour assurer le mélange, la suspension de boues (65) passe au travers d'un venturi (66) disposé à hauteur du débouché de la tubulure d'amenée (63), de manière à bien assurer le brassage de l'ensemble et à réaliser une solution homogène (67) qui est déversée dans le bac suivant (25).

### Exemple 1 :

Sur l'installation de la figure 1, on reproduit les enseignements usuels de la technique BAYER.

Au premier bac (5), la quantité de boues rouges est d'environ 300 g/l puis croit progressivement à 500 g/l à l'avant dernier bac (20), puis 600 g/l au dernier bac (25), pour une viscosité Brookfield de 2000 cps.

Dans le premier bac (3), on ajoute, par tonne de boues sèches, cent grammes d'un agent floculant F formé d'un copolyacrylamide linéaire anionique (100 % de charges anioniques) commercialisé par le Demandeur sous la dénomination 995.

La concentration en soude décroit progressivement de 200 g/l au premier bac jusqu'à 50 g/l au dernier (25).

La viscosité des suspensions de boues envoyées dans le circuit d'élimination (31) est de l'ordre de 9 000 cps, la concentration voisine de 600 g/l, voire plus, et la teneur en soude de l'ordre de 10 g/l.

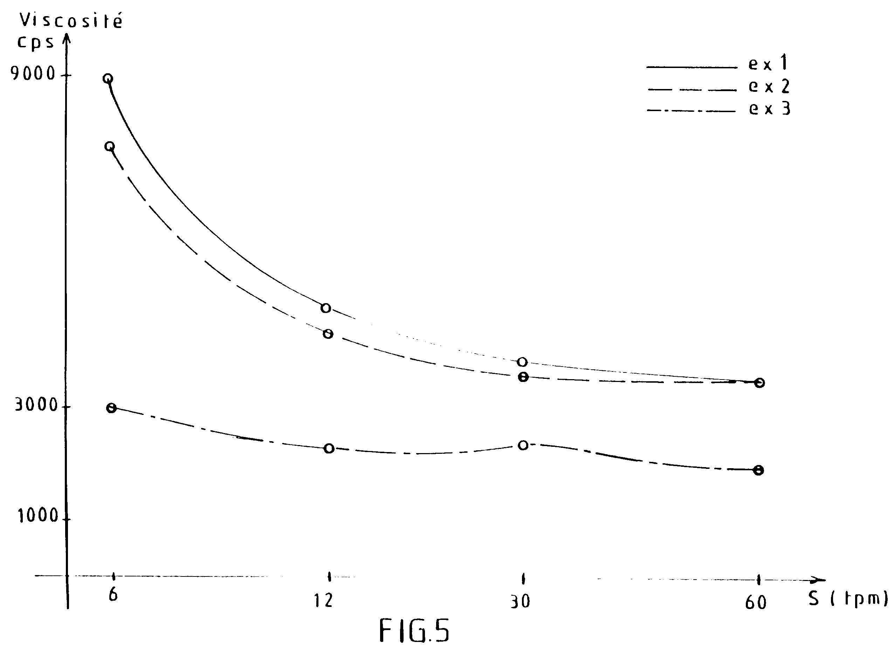

Sur le tableau de la figure 5, on a porté en abscisses la viscosité Brookfield en cps, et en ordonnées le cisaillement en tours par minute, mesurée au viscosimètre Brookfield à des vitesses de 6, 12, 30 et 60 tours par minute (t/min) avec une broche de 3 et à température ambiante. On observe qu'avec les pompes usuelles (5 à 20 t/min), la viscosité des boues à convoyer est importante, et que pour obtenir une viscosité satisfaisante (2500 cps et moins), il faut faire appel à des pompes très performantes, sophistiquées et coûteuses, d'autant que les dimensions des boues convoyées restent appréciables.

Les résultats obtenus sont reportés sur la figure 5 en tracé continu.

### Exemple 2 :

On répète l'exemple 1, en ajoutant un agent dispersant D entre la sortie du dernier bac de décantation (25) et la pompe (32) du circuit d'élimination (31), selon les enseignements du document US-A-4 169 824 cité dans le préambule (figure 1).

Comme agent dispersant (D), on utilise un acrylate de sodium anionique ayant un poids moléculaire de 2000 commercialisé par le Demandeur sous la dénomination "7". On introduit cet agent (D) à raison de cent grammes par tonne (100 g/t) de boues rouges sèches.

On observe que l'on réduit la viscosité initiale de 9000 à 8500 cps.

Si on augmente la concentration en agent dispersant (D), on amène progressivement la viscosité à plafonner vers 6000 cps, pour une concentration de l'ordre de 1,5 kg/tonne. Au delà, il n'y a plus d'amélioration.

En outre, l'addition d'agent dispersant fait chuter la concentration en boues, ce qui affecte l'intérêt économique du procédé.

Enfin, plus la concentration en agent dispersant (D) introduit est élevé, plus la pompe (32) perd de son efficacité.

Les résultats obtenus sont reportés sur la figure 5 en tracé en tirets.

### Exemple 3 :

On répète l'exemple 1, mais en introduisant dans le premier bac (3) un mélange (F + D) :
. du même agent floculant (F), à savoir un copolyacrylamide à 100 % anionique, à raison également de cent grammes par tonne (100 g/t) de boues rouges sèches ;
. du même agent dispersant (D) (acrylate de sodium anionique) qu'à l'exemple 2, également à raison de cent grammes par tonne (100 g/t) de boues sèches.

La viscosité de boues envoyées dans le circuit d'élimination (31) est voisin de 3000 cps et les dimensions de ces boues sont réduites. Les résultats obtenus sont reportés sur la figure 5 en tracé en tirets-points.

De la sorte, on peut augmenter la vitesse ou l'efficacité de la pompe (32) et/ou réduire le nombre de bacs.

En d'autres termes, on peut faire appel à des pompes moins puissantes, à des conduits moins gros, ce qui réduit substantiellement l'investissement de l'installation.

### Exemple 4 :

On répète l'exemple 3, en remplaçant l'agent dispersant D par un autre acrylate de sodium, mais de poids moléculaire voisin de 5000, vendu par le Demandeur sous la dénomination 8.

On abaisse les deux premières valeurs de viscosité (6 et 12 tpm) de 3000 à 2800, et de 2600 à 2500, ce qui facilite la pompabilité.

### Exemple 5 :

On répète l'exemple 3, en remplaçant l'agent dispersant par un acrylate de sodium commercialisé par IMDEX.

On obtient des résultats analogues.

### Exemple 6 :

On répète l'exemple 3 en utilisant respectivement :
- comme agent floculant (F) un copolymère acrylamide/acrylate de sodium présentant une anionicité de 70 %, commercialisé par le Demandeur sous la dénomination 977 VHM ;
- et comme agent dispersant (D) un acrylate de sodium de poids moléculaire compris entre 3000 et 5000, commercialisé par HYCHEM sous la dénomination HP1.

On observe les mêmes résultats qu'à l'exemple 3.

Comme on le voit, le procédé selon l'invention améliore la vitesse de décantation des boues rouges dans les différents bacs. Il permet de diminuer la concentration des suspensions finales de boues rouges, tout en améliorant la concentration de ces suspensions en boues à éliminer, et ce sans modification des pompes ou autres équipements existants.

De la sorte, le procédé selon l'invention est plus efficace. Il permet également de réduire le nombre de bacs laveurs-décanteurs, et par voie de conséquence, de réduire l'investissement de l'installation.

## Revendications

1. Procédé pour fluidifier les suspensions aqueuses floculées de boues rouges dans la fabrication de la bauxite par le procédé de Bayer, qui consiste :
. à dissoudre de la bauxite par de la soude,
. puis, à décanter et à laver les boues rouges formées pour les séparer de l'alumine dans des bacs successifs tout en recyclant en amont les eaux de lavage,
. et enfin, à éliminer les boues rouges ainsi traitées,
et dans lequel, on introduit dans la suspension de l'un des bacs successifs, un agent floculant (F) constitué par un polyacrylamide de poids moléculaire supérieur à dix millions ;
caractérisé en ce que simultanément à cet agent floculant (F), on ajoute à la suspension et dans le même bac, un agent dispersant (D) formé par un polymère d'acide acrylique anionique de poids moléculaire inférieur à cinquante mille.

2. Procédé selon la revendication 1, caractérisé en ce que le polyacrylamide F présente une anionicité comprise entre 20 et 100 moles %.

3. Procédé selon l'une des revendications 1 et 2, caractérisé en ce que l'agent floculant anionique F est un homopolymère de l'acide acrylique, un copolymère de polyacrylamide, un terpolymère linéaire.

4. Procédé selon l'une des revendications 1 à 3, caractérisé en ce que l'agent dispersant (D) est un polyacrylate de sodium de poids moléculaire compris entre mille et dix mille.

5. Procédé selon l'une des revendication 1 à 4, caractérisé en ce que dans le mélange (F + D), la quantité en poids d'agent floculant (F) par rapport à la quantité en poids d'agent dispersant (D), est comprise entre 0,1 et 5, de préférence est voisine de un.

6. Procédé selon l'une des revendications 1 à 5, caractérisé en ce que l'adjonction du mélange d'agent floculant (F) et d'agent dispersant (D), est effectué dans l'un quelconque des derniers bacs de décantation (20,25) des boues rouges.

7. Procédé selon l'une des revendications 1 à 6, caractérisé en ce que le mélange d'agent floculant (F) et d'agent dispersant (D) est introduit à température ambiante en suspension aqueuse, à une concentration comprise entre 0.1 et 20 g/litre, et de préférence 1 à 10 g/litre à raison de 5 à 150 grammes/tonne de suspensions de boues rouges sèches à traiter.

8. Procédé selon l'une des revendications 1 à 7, caractérisé en ce que la quantité du mélange produit est compris entre cinq à deux mille grammes par tonne (5 à 2000 g/t) de boues, de préférence entre vingt et quatre cent grammes par tonne (20 à 400 g/t).

## Patentansprüche

1. Verfahren zur Fluidisierung von wäßrigen, ausgeflockten Rotschlammsuspensionen bei der Herstellung von Bauxit nach dem Bayer-Verfahren, beruhend auf:
- Lösen von Bauxit in Natronlauge,
- anschließend Dekantieren und Waschen des entstandenen Rotschlamms, um ihn bei vollständiger Wiedereinleitung der Waschwässer stromaufwärts von dem Aluminiumoxid in aufeinanderfolgenden Dekantiergefäßen zu trennen,
- und schließlich Entfernen des so behandelten Rotschlammes,
indem ein Flockungsmittel (F), gebildet aus einem Polyacrylamid mit einem Molekulargewicht größer als 10 x 10⁶ in die Suspension von einem der aufeinanderfolgenden Dekantiergefäße eingeführt wird;
**dadurch gekennzeichnet**, daß gleichzeitig mit dem Flockungsmittel (F) ein Dispergiermittel (D), gebildet aus einem anionischen Polymer von Acrylsäure mit einem Molekulargewicht geringer als 50.000 zu der Suspension und in das gleiche Dekantiergefäß hinzugefügt wird.

2. Verfahren gemäß Anspruch 1,
**dadurch gekennzeichnet**, daß das Polyacrylamid (F) eine Anionizität von zwischen 20 und 100 Mol % aufweist.

3. Verfahren gemäß einem der Ansprüche 1 und 2,
**dadurch gekennzeichnet**, daß das anionische Flockungsmittel (F) ein Homopolymer von Acrylsäure, ein Copolymer von Polyacrylamid, oder ein lineares Terpolymer ist.

4. Verfahren gemäß einem der Ansprüche 1 bis 3,
**dadurch gekennzeichnet,** daß das Dispergiermittel (D) ein Natriumpolyacrylat mit einem Molekulargewicht von zwischen 10⁶ und 10 x 10⁶ ist.

5. Verfahren gemäß einem der Ansprüche 1 bis 4,
**dadurch gekennzeichnet,** daß in dem Gemisch (F + D) die Gewichtsmenge des Flockungsmittels (F) im Verhältnis zu der Gewichtsmenge des Dispergiermittels (D) zwischen 0,1 und 5, bevorzugt ungefähr 1, beträgt.

6. Verfahren gemäß einem der Ansprüche 1 bis 5,
**dadurch gekennzeichnet,** daß die Zugabe des Gemisches aus Flockungsmittel (F) und Dispergiermittel (D) in irgendeinem der letzten Gefäße der Dekantierung (20, 25) des Rotschlammes stattfindet.

7. Verfahren gemäß einem der Ansprüche 1 bis 6,
**dadurch gekennzeichnet,** daß das Gemisch aus Flockungsmittel (F) und Dispergiermittel (D) unter Umgebungstemperatur in die wäßrige Suspension eingeführt wird, mit einer Konzentration von zwischen 0,1 und 20 g/Liter, und bevorzugt 1-10 g/Liter im Verhältnis zu 5-150 Gramm/Tonne von Suspensionen von zu behandelndem trockenen Rotschlamm.

8. Verfahren gemäß einem der Ansprüche 1 bis 7,
**dadurch gekennzeichnet,** daß die Menge des hergestellten Gemisches zwischen 5 und 2000 Gramm/Tonne (5-2000 g/t) von Schlamm, bevorzugt zwischen 20 und 400 Gramm/Tonne (20-400 g/t), beträgt.

## Claims

1. A process for fluidifying flocculated aqueous suspensions of red muds in the production of alumina from bauxite by the Bayer process which consists:
- in dissolving bauxite using sodium hydroxide ;
- then, in decanting and in washing file red muds formed in order to separate them from the alumina in successive vats, while recycling the washing waters upstream ;
- and finally, in eliminating the red muds thus treated ;
and in which a flocculant (F) consisting of a polyacrylamide of molecular weight greater than ten million is introduced into the suspension of one of the successive vats ;
wherein a dispersing agent (D) formed by an anionic acrylic acid polymere of molecular weight lower than fifty thousand is added simultaneously with said flocculant (F) to the suspension in the same vat.

2. The process as claimed in claim 1, wherein the polyacrylamide (F) has an anionicity between 20 and 100 mol%.

3. The process as claimed in one of claims 1 and 2, wherein the anionic flocculant (F) is an acrylic acid homopolymer, a polyacrylamide copolymer or a linear terpolymer.

4. The process as claimed in one of claims 1 to 3, wherein the dispersing agent (D) is a sodium polyacrylate of molecular weight between one thousand and ten thousand.

5. The process as claimed in one of claims 1 to 4, wherein, in the mixture (F + D), the amount by weight of flocculant (F) relative to the amount by weight of dispersing agent (D) is between 0.1 and 5 and is preferably in the region of one.

6. The process as claimed in one of claims 1 to 5, wherein the addition of the mixture of flocculant (F) and dispersing agent (D) is carried out in any one of the latter vats (20, 25) for decanting the red muds.

7. The process as claimed in one of claims 1 to 6, wherein the mixture of flocculant (F) and dispersing agent (D) is introduced at ambient temperature in aqueous suspension, at a concentration between 0.1 and 20 g/liter, and preferably 1 to 10 g/liter, in a proportion fo 5 to 150 grams/tonne of dry red mud suspension to be treated.

8. The process as claimed in one of claims 1 to 7, wherein the amount of the mixture produced is between five and two thousand and grams per tonne (5 to 2,000 g/t) of muds, preferably between twenty and four hundred grams per tonne (20 to 400 g/t).
